# EUROPÄISCHE PATENTSCHRIFT

(11) **EP 3 737 712 B1**
(45) Veröffentlichungstag und Bekanntmachung des Hinweises auf die Patenterteilung: **26.01.2022**
(21) Anmeldenummer: 18830777.1
(22) Anmeldetag: 17.12.2018
(51) Int. Cl.: C08J 7/04, C08J 7/043, C08J 7/046, C09D 183/04, C08G 77/04

(54) **VERFAHREN ZUM GRUNDIEREN VON SILIKONFUGEN**
METHOD FOR PRIMING SILICONE JOINTS
MÉTHODE POUR APPRÊTER DES JOINTS EN SILICONE

(30) Priorität: 08.01.2018 DE 102018100214
(43) Veröffentlichungstag der Anmeldung: 18.11.2020
(73) Patentinhaber: Nass, Jörg, 47574 Goch (DE)
(72) Erfinder: Nass, Jörg, 47574 Goch (DE)
(74) Vertreter: Schoenen, Norbert
(86) Internationale Anmeldenummer: PCT/EP2018/085305
(87) Internationale Veröffentlichungsnummer: WO 2019/134817

(56) Entgegenhaltungen:
- DE-A1- 2 407 290
- DE-A1- 2 852 090
- DE-A1- 10 156 918
- DE-T2- 69 205 171
- US-A- 4 704 419
- US-A- 4 923 946
- US-A- 5 366 807

## Beschreibung

Die Erfindung betrifft ein Verfahren zum Grundieren von Silikonfugen an Fenstern, Türen, Verglasungsbereich, Sanitärbereich und dergleichen.

### Stand der Technik

Im Gegensatz zur Erfindung bietet die Fa. Euroteam Fugenbänder an, die in Neueinbringung angewandt werden (DE 20 2015 006 906 U1). Diese bestehen nicht aus Silikon, sondern aus Polyurethan. Abgesehen davon, das Polyurethan durchaus überstreichbar ist, sind die Fugenbänder der Fa. Euroteam für die Verklebung z. B. auf Beton, Stein, etc. vorgesehen, jedoch nicht für einen nachfolgenden Farbanstrich.

Diese Produkte sind in keiner Art und Weise vergleichbar mit der vorliegenden Erfindung. Die Anwendung und das Einsatzgebiet betreffen einen noch nicht einmal artverwandten Bereich. Silikonfugen sind nämlich bereits bestehende Baufugen an Fenstern, Türen, Verglasungsbereich, Sanitärbereich bis hin zum Konstruktionsbereich, z. B. bei Fahrzeugen und Maschinen.

In der DE 10 2008 002 250 A1 wird ein Beschichtungsmittel für Wischgummis eines Wischblattes für Scheibenwischer eines Kraftfahrzeugs beschrieben. Anstelle des Wischgummis können auch andere Elastomermaterialien mit dem Beschichtungsmaterial behandelt werden. Die Beschichtung erfolgt, um die Geräuschentwicklung beim Wischvorgang zu vermindern oder völlig zu verändern. Das Beschichtungsmittel enthält mindestens ein Bindemittel mit mindestens einer Harzkomponente, welches Tetramethoxysilan sein kann. Eine nachfolgende Beschichtung mit einem Anstrichsystem ist hier nicht vorgesehen.

Bei dem im Technischen Merkblatt Rajasil NIG der Fa. HECK Wall Systems GmbH, 95615 Marktredwitz handelt es sich um eine lösemittelfreies hydrophobierend wirkendes Injektions-, Grundierungs- und Imprägnierungsmittel auf Silikonbasis. Dieses Mittel ist vorgesehen für offenporige und saugfähige Untergründe, also nicht für Silikonfugen.

### Aufgabe und Lösung der Erfindung

Aufgabe der Erfindung: Die Ermöglichung von verlaufsfreien wie abriebfesten Anstrichen von bestehenden, ausvulkanisierten Silikonfugen.

Diese Aufgabe wird erfindungsgemäß durch die Merkmale des Anspruchs 1 gelöst.

Unter anderem werden die folgenden Vorteile erreicht: Die Lasur ist verträglich mit den meisten auf dem Markt befindlichen, handelsüblichen Anstrichsystemen.

Verwendungsmöglichkeiten bestehen darin, bestehende Silikonfugen an Fenstern, Türen, Verglasungsbereich, Sanitärbereich bis hin zum Konstruktionsbereich für nachfolgende Anstrichsysteme vorzubereiten.

An Stelle von minderwertigen Dichtstoffen, wie z. B. Acrylaten, können nun hochwertige Dichtstoffe in Form von Silikon eingebracht werden, da eine Anstrichfähigkeit mit dem erfindungsgemäßen Produkt nun gegeben ist.

Eine Komponente A, nämlich ein Imprägnierungsmittel, zum Beispiel Rajasil NIG, und eine Komponente B, besteht aus einer Lacklasur und Wasser, zum Beispiel einem wasserverdünnbaren Acrylharz oder einer anderen wasserverdünnbaren Dispersions-Lackfarbe, werden gemischt und sofort danach verarbeitet. Die Verarbeitung besteht darin, dass die Mischung auf Silikonfugen als Grundierung aufgebracht wird. Nach einer Trocknungszeit von 24 Stunden kann die Grundierung überstrichen werden, also der Endanstrich mit handelsüblichen Anstrichsystemen erfolgen.

Im Unterschied zu der DE 10 2008 002 250 A1 handelt es sich bei der vorliegenden Erfindung nicht um eine Beschichtung zur Verminderung einer Geräuschentwicklung, sondern um eine Grundierung eines Untergrundes, welcher sonst mit handelsüblichen, wasserverdünnbaren Dispersionsfarben nicht überstreichbar wäre.

Erstens geht es erfindungsgemäß nicht um eine Beschichtung, um das Quietschen oder eine sonstige Geräuschentwicklung bei der Bewegung einer Fläche auf einer anderen zu verhindern, sondern um ein Verfahren zum Grundieren von Silikonfugen für einen nachfolgenden Anstrich mit wasserverdünnbaren Dispersions-Lackfarben.

Zweitens ist trotz der 2009 veröffentlichten Patentanmeldung DE 10 2008 002 250 A1 der Firma Bosch bisher keine derartige Lösung auf dem Markt oder im Schrifttum bekannt geworden, obwohl hierfür ein hohes Bedürfnis bestand.

Vorteilhafte Ausgestaltungen der Erfindung sind in den Unteransprüchen angeführt.

### Ausführungsbeispiele

Im Folgenden werden mehrere Ausführungsbeispiele der Erfindung näher beschrieben.

### Beispiel 1

Ein bestehender Wohnblock mit 4 Etagen und 16 Wohneinheiten soll vom Maler in der Farbe Weiß überstrichen werden. In dem Wohnblock sind 96 Fenster vorhanden. An den Fenstern sind somit etwa 400 Meter Silikonfugen in der Farbe Grau vorhanden. Am Gebäude sind noch weitere 150 Meter graue Dehnungsfugen vorhanden. Es gibt demnach 550 Meter Silikonfugen an dem Gebäude.

Für die bestehenden Silikonfugen gibt es keine Möglichkeit, diese zu überstreichen. Nun muss der Maler eine weitere Firma beauftragen, um bestehende Fugen herauszutrennen und diese passend zum weißen Anstrich erneuern zu lassen. Die Kosten für eine Restaurierung bzw. Neuverfugung liegen bei etwa 6.000 Euro netto.

Wird nun das erfindungsgemäße Produkt vom Maler eingesetzt, können vorhandene Fugen überstrichen werden. Neben einer enormen Zeitersparnis belaufen sich nun die Kosten für eine Gestaltung der Fugen im passenden Farbton auf etwa 700 Euro netto (ca. 8 m² Fugenanstrich). Der Maler bzw. sein Kunde haben somit Kosten von nahezu 90 % eingespart.

### Beispiel 2

Ein Trockenbauer ist mit dem Innausbau einer Gipswandverkleidung beauftragt. Um das Gewerk für den Maler fertig abzuschließen, setzt der Trockenbauer wie üblich einen Acryldichtstoff ein, um die Anschlussfugen an Decke und Wand zu verfugen. Der Trockenbauer weiß jedoch um die Nachteile der Verfugung mit Acryl. In der Vergangenheit hat er mit diesem überstreichbaren Dichtstoff mehrfach die Erfahrung gemacht, dass durch Überdehnung Ablösungen nach Monaten oder auch Jahren erfolgten und von Kunden reklamiert wurden.

Die Ursache liegt darin, dass Acryl durch einen hohen Wasseranteil einer Schrumpfung unterliegt. Auch die Dehnfähigkeit von Acrylatdichtstoffen ist i.d.R. auf 7 % beschränkt. Diese technische Eigenschaft führt zu den oben genannten Problemen.

Bringt der Trockenbauer nun aber einen hochwertigeren Dichtstoff auf Silikonbasis in die Anschlussfugen ein, werden die zuvor genannten Probleme von Ablösungen durch die höhere Bewegungsaufnahme des Silikons (ca. 25 % und mehr) eliminiert.

Da nun der Trockenbauer oder auch der Maler nachfolgend das erfindungsgemäße Produkt einsetzt, ist belegt, dass das Produkt von verschiedenen Handwerkern in diversen Bauphasen im Innen- und Außenbereich eingesetzt werden kann. Durch die qualitative Verfugung werden Reklamationen verringert, Kosten eingespart und ein zufriedener Endkunde sichergestellt.

### Herstellung

### Ausgangsmaterialien:

### Komponente A:

10 % einer Nano-Imprägnierung in Form eines wasserfreien Injektions- und Imprägnierungsmittels auf Silikonbasis
im konkreten Fall bestehend aus
Trimethoxy(2,4,4-trimethylpentyl)silan
Polydimethylsiloxan
Ethansäure
Methanol
und erhältlich unter dem Handelsnamen Rajasil NIG von der Fa. HECK Wall Systems GmbH, 95615 Marktredwitz.

Alternativ einsetzbar sind die kommerziell erhältlichen Produkte
- "Porofin"
- "Bostik Kiesey Horizontalstopp Versiegelungskonzentrat"
- "Remmers Kiesol rot"
- "Ceresit BT CO 81 Verkieselung"
- "TILAN Verkieselung"
- "KÖSTER Mautrol Bohrloch-Flüssig"
- "weber.tec Horizontalsperre SMK Silikonmikroemulsion"
- "Nano Steinversiegelung StoneprotecT SP5000"

### Komponente B:

68 % Lacklasur
22 % Wasser
im konkreten Fall bestehend aus wasserverdünnbarem Acryl-Harz und erhältlich unter dem Handelsnamen P-Weisslack 2in1 seidenmatt, SPWM 9110 von der Fa. Wilckens Farben GmbH; 25348 Glückstadt.

Eine Besonderheit besteht im Mischen der Komponente A (Imprägnierung) mit der Komponente B (Lacklasur). Die vermischten Komponenten verklumpen nämlich je nach Umgebungstemperatur bereits nach wenigen Minuten. Erfindungsgemäß werden daher die Komponenten je nach Mengenbedarf erst kurz vor der Anwendung zu vermischt. So kann eine Verarbeitungszeit bei einer Bezugstemperatur über 21 °C von ca. 45 Minuten erreicht werden.

### Vorbereitung:

In den o. g. Verhältnissen durchmischen.

Da das Produkt 2-komponentig ist, werden die Komponenten A und B vor Ort nach Bedarf durch den Anwender nach Anleitung gemischt.

### Anwendung:

Die Komponenten werden unabhängig miteinander so lange verrührt, bis eine homogene Masse entsteht.

Der zu grundierende Silikonuntergrund muss vorher vom vorhandenen Trennmittel gereinigt werden.

Die Emulsion satt auf die Oberfläche auftragen. Nach einer Trocknungszeit von 24 Stunden kann der Endanstrich erfolgen. Ein wiederholtes Auftragen der Emulsion ist nur notwendig, wenn sich nach einer optischen Kontrolle herausstellt, dass die Deckung noch nicht ausreicht.

Das erfindungsgemäße Produkt kann sowohl innen als auch außen verwendet werden.

### Tests

Es wurden Langzeittests überstrichener Silikonfugen mit positiven Ergebnissen unter europäischen Witterungsverhältnissen durchgeführt.

Silikonfugen sind ohne das erfindungsgemäße Produkt bzw. Verfahren nicht überstreichbar.

Sämtliche %-Angaben sind als Gewichtsprozente zu verstehen.

Weitere Vorteile sind, dass zum Beispiel beim Verfugen von Fenster oder Türanlagen nicht mehr auf einen passenden Farbton der Silikondichtmasse geachtet werden muss, wenn das Bauteil am Schluss ohnehin einen andersfarbigen Anstrich erhält.

Auf Acryldichtstoffe kann in Nassräumen komplett verzichtet werden, wobei diese - im Gegensatz zu Silikon - keine fungizide Eigenschaft haben.

Mit Silikon verunreinigte Oberflächen müssen nicht mehr aufwändig gereinigt werden.

Sie können mit dem erfindungsgemäßen Produkt für einen neuen Anstrich vorbereitet werden.

### Beispiel 3

Komponente A: 130 ml 100 % Lacklasur, im konkreten Fall bestehend aus wasserverdünnbarem Acryl20-Harz, erhältlich z.B. unter dem Handelsnamen P-Weißlack 2in1 seidenmatt, SPWM 9110 von der Fa. Wilckens Farben GmbH, 25348 Glückstadt.

Komponente B: 20 ml 100 % einer Nano-Imprägnierung in Form eines wasserfreien Injektions- und Imprägnierungsmittels auf Silikonbasis, erhältlich z.B. unter dem Handelsnamen Rajasil NIG von der Fa. HECK Wall Systems GmbH, 95615 Marktredwitz.

### Beispiel 4

Ein einkomponentiges Produkt besteht aus 60 % Lacklasur und 40 % filmbildende Polymere (enthalten z.B. in Haargel).

Es muss vor Gebrauch nur durchgerührt werden und ist anzuwenden wie eine normale Farbe.

## Patentansprüche

1. Verfahren zum Grundieren von Silikonfugen an Fenstern, Türen, Verglasungsbereich, Sanitärbereich und dergleichen, unter Verwendung einer Mischung aus einem Imprägniermittel, einem Lack und Wasser oder ohne Wasser zum Grundieren von Silikonoberflächen, wobei die Mischung aus den Komponenten erst unmittelbar vor der Anwendung hergestellt wird, wobei das Imprägniermittel eine Säure enthält, wasserfrei ist und ein Siliciumdioxid-Precursor ist, der im sauren Milieu in Anwesenheit von Wasser zu Siliciumdioxid-Partikeln hydrolisiert, und wobei der Lack eine wasserverdünnbare Dispersions-Lackfarbe ist.

2. Verfahren nach Anspruch 1,
**dadurch gekennzeichnet,**
**dass** die Mischung aus
5 - 15 % wasserfreiem Imprägniermittel,
60 - 75 % Lacklasur und
20 - 25 % Wasser besteht, wobei die %-Angaben als Gewichtsprozente zu verstehen sind.

3. Verfahren nach Anspruch 1,
**dadurch gekennzeichnet,**
**dass** der Siliciumdioxid-Precursor Tetraethylsilikat ist.

4. Verfahren nach Anspruch 1,
**dadurch gekennzeichnet,**
**dass** die Mischung aus
10 % wasserfreiem Imprägniermittel,
68 % Lacklasur und
22 % Wasser besteht, wobei die %-Angaben als Gewichtsprozente zu verstehen sind.

5. Verfahren nach Anspruch 1,
**dadurch gekennzeichnet,**
**dass** die Mischung aus
80 - 90 % wasserverdünnbarem Acryl-Harz und
10 - 20 % wasserfreiem Imprägniermittel besteht, wobei die %-Angaben als Gewichtsprozente zu verstehen sind.

## Claims

1. Method for priming silicone joints on windows, doors, glazing regions, sanitary facilities and the like, using a mixture of an impregnating agent, a lacquer and water, or without water, for priming silicone surfaces, wherein the mixture of the components is produced only immediately before use, wherein the impregnating agent contains an acid, is anhydrous and is a silicon dioxide precursor which hydrolyzes to form silicon dioxide particles in the acidic environment in the presence of water, and wherein the lacquer is a water-dilutable dispersion lacquer paint.

2. Method according to claim 1,
**characterized in that,**
the mixture consists of
5-15% anhydrous impregnating agent,
60-75% lacquer glaze and
20-25% water,
where the percentage figures are to be understood to be percentages by weight.

3. Method according to claim 1,
**characterized in that,**
the silicon dioxide precursor is tetraethyl silicate.

4. Method according to claim 1,
**characterized in that,**
the mixture consists of
10% anhydrous impregnating agent,
68% lacquer glaze and
22% water,
where the percentage figures are to be understood to be percentages by weight.

5. Method according to claim 1,
**characterized in that,**
the mixture consists of
80-90% water-dilutable acrylic resin and
10-20% anhydrous impregnating agent,
where the percentage figures are to be understood to be percentages by weight.

## Revendications

1. Procédé destiné à l'apprêt de joints silicones sur fenêtres, portes, surfaces vitrées, surfaces sanitaires et analogues, en utilisant un mélange d'un agent d'imprégnation, d'un vernis et d'eau ou sans eau pour apprêter des surfaces silicones, le mélange des composants n'étant réalisé qu'immédiatement avant l'utilisation, l'agent d'imprégnation contenant un acide, étant anhydre et étant un précurseur de dioxyde de silicium qui s'hydrolyse en particules de dioxyde de silicium dans un milieu acide en présence d'eau, et le vernis étant une peinture à dispersion diluable dans l'eau.

2. Procédé selon la revendication 1,
**caractérisé en ce**
**que** le mélange est composé de
5 à 15 % d'agent d'imprégnation sans eau,
60 à 75 % de glacis-vernis et
20 à 25 % d'eau,
les pourcentages devant être compris comme des pourcentages en poids.

3. Procédé selon la revendication 1,
**caractérisé en ce**
**que** le précurseur de dioxyde de silicium est le silicate de tétraéthyle.

4. Procédé selon la revendication 1,
**caractérisé en ce**
**que** le mélange est composé de
10 % d'agent d'imprégnation sans eau,
68 % de glacis-vernis et
22 % d'eau,
les pourcentages devant être compris comme des pourcentages en poids.

5. Procédé selon la revendication 1,
**caractérisé en ce**
**que** le mélange est composé de
80 à 90 % de résine acrylique diluable dans l'eau et
10 à 20 % d'agent d'imprégnation sans eau,
les pourcentages devant être compris comme des pourcentages en poids.
